Europäisches Patentamt

European Patent Office

Office européen des brevets

(11) Publication number: **0 369 064**
**A1**

## (12) EUROPEAN PATENT APPLICATION

(21) Application number: **88202535.6**

(22) Date of filing: **14.11.88**

(51) Int. Cl.5: **G01N 27/30**

(43) Date of publication of application:
**23.05.90 Bulletin 90/21**

(84) Designated Contracting States:
**BE CH DE FR GB IT LI LU NL**

(71) Applicant: **Yokogawa Electrofact B.V.**
**Radiumweg 30**
**NL-3812 RA Amersfoort(NL)**

(72) Inventor: **de Jong, Hendrik**
**Prinsenhof 18**
**NL-3871 DB Hoevelaken(NL)**

(74) Representative: **de Wit, Gerard Frederik, Ir. et al**
**Octrooi- en Merkenbureau De Wit B.V.**
**Breitnerlaan 146**
**NL-2596 HG Den Haag(NL)**

(54) **Electrode.**

(57) The invention consists in an electrode (1,2,9) having a partial layer (8) with very small pores, which covers a liquid contact formed in a porous wall part (7) of the electrode.

Preferably the pores have a width of less than 1 or even less than 0,4 $\mu$ m.

The particles may be metallic or ceramic and/or heat bonded to each other and the electrode surace underlying them.

## FIG. 1

**Electrode.**

The invention relates to an electrode with a liquid contact which is formed by a porous wall part.

Such liquid contacts establish an electrical contact with a liquid medium of which an ion concentration or the concentration of a chemically active species such as oxygen is measured. In many instances the liquid contact is a contact of a reference electrode or a combined electrode containing a reference part. The term porous encompasses a single hole, a plurality of holes or a structure having a more or less irrigular configuration of pores.

In many applications, such as fermentation processes and/or other bio-chemical processes it may be important to prevent bacteria to transfer from a former batch to a following batch. Therewith it is a difficulty that such a liquid contact of the known art permits passage of bacteria through them and consequently contamination of a later batch. This can be countered, however, by a stream of liquid from the electrode towards the medium in which the electrode protrudes, but this requires additional apparatus to maintain such a liquid stream and moreover may be undesirable if the contact liquid may not be added to the medium.

The invention aims to solve these difficulties in a simple and conclusive way. For that purpose the invention provides that at one side of the porous wall part a layer of fine particles is applied with very small pores.

It has appeared that in this way a conclusive protection against bacteria penetration is possible. The layer covers pores of the porous wall part, which per se are sufficiently large to allow passage of bacteria, and has such small pore dimensions, that bacteria are withheld.

Preferably the pore width of the layer is less than 1 $\mu$ m and still more preferably less than 0,4 $\mu$ m.

With known measuring electrodes the layer covers a wall portion of only small area surrounded by non-porous wall parts. An example is a fine hole or a small porous piece which is melted in a glass wall.

In such a case according to the invention it is preferably provided that the layer extends over non-porous wall parts having a surface area which is may times that of the porous wall part. This feature does not only guarantee that no leakage will occur at the interface of the porous wall part and the non-porous wall parts, but moreover that the liquid contact is improved and is made more sure. This is to be contributed to the phenomenon that the contact liquid extends itself in the pores of the porous layer by reason of which the contact surface area between the contact liquid and the medium is considerably enlarged. This gives further the advantage of smaller chances that barriers or obstructions occur.

In case the porous wall part is located in a cylindrical wall part a further elaboration of the invention provides that the layer surrounds the cylindrical wall part as an annular band.

Another elaboration of the invention provides that said layer forms a cap on a closed end of a cylindrical electrode.

These elaborations provide the advantage that a mechanical strong bond with the electrode is obtained and that the surface area of the layer is rather important, so that the electrical resistance of the liquid contact is reduced.

According to an embodiment the particles of the layer consist at least partly of small particles of a noble metal having a high melting point, such as platinum.

In that instance the contact between the electrolyte and the medium is partly through the liquid in the pores and partly through the metallic particles. In practice this needs not to impair the reliability of the measurements.

According to another embodiment the layer consists at least in part of fine particles of ceramic material.

The invention further provides a method for manufacturing an electrode as described above, which method is characterized in that on a porous part of the electrode particles are applied by means of sputtering or a paint, paste or suspension of particles is applied by means of brushing, spraying, dipping or screen painting and that the particle layer afterwards is stabilized.

Applying of the particle layer by means of screen printing has the advantage that thin layers of well defined thickness can be obtained and that particle losses are reduced in comparison with for instance brushing.

After application of the partcile layer it may be heated to evaporate or even burn the liquid substance out of the paste, a further heating being possible to let the particles sinter or burn them into their substrate (the porous and/or the non-porous wall parts).

An example of the invention exists in that commercially available fine platinum particles are mixed with water or an organic solved to prepare a suspension or a paste. This is brushed onto the electrode and dried. Then a thermal treatment is carried out to obtain a satisfactory bacteria impervious layer, but in case the electrode is made of glass which still has to be annealed, the annealing step normally is sufficient to stabilize the particle layer.

Another example exists in that a commercially available ceramic adhesive system, such as the alumina base adhesive which is sold under the name Ceramabond™ 503 is applied on the electrode and cured at the prescribed curing temperature. The obtained layer was porous with such fine pores that bacteria cannot pass.

The invention in the following is further elucidated with reference to the drawing, in which:

Figure 1 shows schematically a first embodiment of the invention; and

Figure 2 shows a second embodiment.

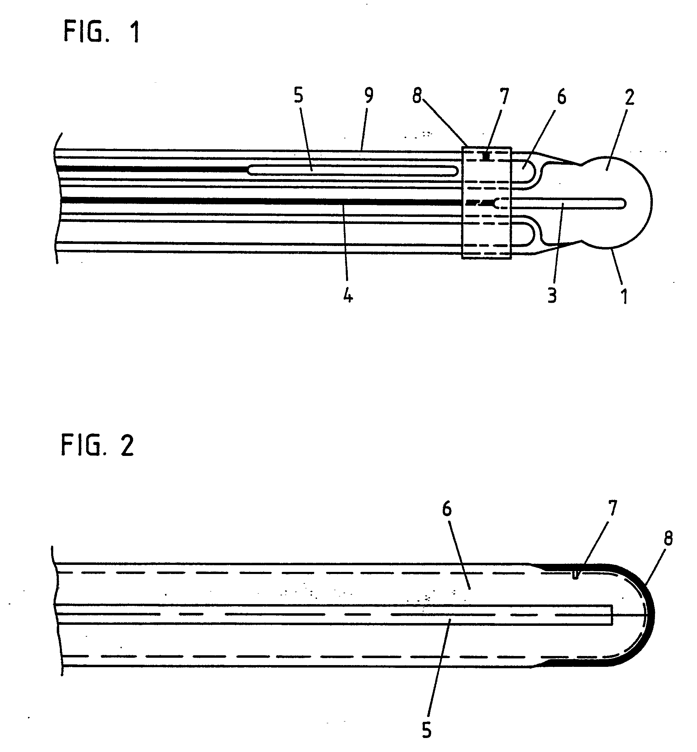

Each of the electrodes of fig. 1 and fig. 2 has a wall part 1, which at its inner side is bounded by an electrolyte 2, which is in contact with an electrode system 3, which via a conductor 4 is inserted in a measuring circuit as is known and usual.

A reference electrode 5 contacts an electrolyte 6 which in the porous part 7 is in direct liquid contact with the liquid medium surrounding the electrode.

So far the electrodes are known and usual in the art.

According to the invention a thin layer of fine particles 8 is applied on the porous wall part 7.

In the shown embodiment of fig. 1 the layer 8 is in the shape of an annular layer around the cylindrical electrode tube 9.

In the embodiment of fig. 2 the layer 8 is in the shape of a cap. Both the ring and the cap embodiments provide a large contact area with the surrounding liquid and a strong hold of the layer on the electrode. In the embodiment of fig. 1 the layer may favourably be applied by means of screen printing, which allows for a thin layer of well defined thickness and little particle losses, which latter feature may be important if the particles are expensive, such as platinum particles.

The layer of fig. 2 easily can be applied by dipping in a suspension, paint or paste containing the particles.

After application of the layer by any suitable method it is heat treated to evaporate the liquid or cure the paste and possibly to burn the particles in the electrode material, for instance glass, or sintering them together. The obtained layer adheres reliably to the electrode, is impervious for bacteria and has the further advantage to increase to a considerable extend the contact area of the electrolyte 6 and the medium outside the electrode. Such an increase of the contact area between the layer and the medium outside the electrode has the advantages of lowering the electrical resistance of the liquid contact and reducing the influence of the local soiling.

In case the particles are made of a conducting material the reduction of the resistance is obvious, but also in case of insulating particles a reduction of the resistance is possible by reason of current conduction through the liquid in the pores. For this reason it may be useful to have a porosity of at least 10%.

An additional advantage of such a particle layer is that in practice it is smooth and can be easily cleaned, which is not always true for the porous wall part 7 if not covered by the layer. Further with the electrode according to the invention no liquid stream through the pores of the porous wall part from the inside to the outside has to be maintained.

## Claims

1. Electrode with a liquid contact which is formed by a porous wall part (7), characterized in that at one side of the said wall layer (8) of fine particles is applied with very small pores.

2. Electrode according to claim 1, characterized in that the pores of the layer have a pore width of less than 1 $\mu$ m.

3. Electrode according to claim 2, characterized in that the pore width is less than 0,4 $\mu$ m.

4. Electrode according to any of the preceding claims in which the porous wall part covers a small surface area surrounded by non-porous wall parts, characterized in that the layer extends over a surface area of non-porous wall parts which is many times that of the porous wall part.

5. Electrode according to claim 4, in which the porous wall part is located in a cylindrical non-porous wall part, characterized in that the layer surrounds the cylindrical wall part (9) as an annular band.

6. Electrode according to claim 4, characterized in that the layer forms a cap on a closed end of a cylindrical electrode.

7. Electrode according to any of the preceding claims, characterized in that said layer has a porosity of at least 10%.

8. Electrode according to any of the preceding claims, characterized in that the layer at least partly is composed of small particles of a noble metal having a high melting point.

9. Electrode according to claim 8, characterized in that the noble metal is platinum.

10. Electrode according to any of the preceding claims, characterized in that the layer is at least partly composed of fine particles of ceramic material.

11. Method for manufacturing an electrode according to any of the preceding claims, characterized in that on a porous part of the electrode particles are applied by means of sputtering or a paint, paste or suspension of particles is applied by means of brushing, spraying, dipping or screen painting and that the particle layer afterwards is stabilized.

12. Method according to claim 11, characterized in that said stabilizing is carried out by means of a heat treatment involving evaporation of any solvent, curing of any adhesive agent, adherence of the particles to the electrode material and/or sintering the particles together.

FIG. 1

FIG. 2

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | PATENT ABSTRACTS OF JAPAN, vol. 5, no. 191 (P-92)[863], 5th December 1981; & JP-A-56 115 949 (HORIBA SEISAKUSHO K.K.) 11-09-1981 * Abstract * | 1-4,8,9 | G 01 N 27/30 |
| A | IDEM | 5-7,11 | |
| A | US-A-3 756 936 (NEUWELT) * Column 2, lines 45-65; figure 1 * | 1,6 | |
| A | US-A-3 264 205 (LEONARD et al.) * Column 3, line 41 - column 4, line 43; figure 1 * | 1,4 | |
| A | EP-A-0 022 625 (BECKMAN INSTRUMENTS INC.) * Page 6, line 7 - page 7, line 19; page 7, line 24 - page 8, line 16; abstract; figures 1-3 * | 1,4-6 | |
| A | US-A-3 578 579 (HEBERT et al.) * Column 2, lines 7-72; figures 1-5 * | 1 | TECHNICAL FIELDS SEARCHED (Int. Cl.5)  G 01 N |

The present search report has been drawn up for all claims

| Place of search | Date of completion of the search | Examiner |
|---|---|---|
| THE HAGUE | 28-07-1989 | BOSMA R.A.P. |